Europäisches Patentamt

European Patent Office

Office européen des brevets

(19)

(11) Numéro de publication: **0 275 744**
**B1**

(12) **FASCICULE DE BREVET EUROPEEN**

(45) Date de publication du fascicule du brevet:
16.08.90

(51) Int. Cl.⁵: **B62D 7/14**

(21) Numéro de dépôt: 87402831.9

(22) Date de dépôt: 11.12.87

(54) Dispositif de correction de l'angle d'attitude d'un véhicule automobile.

(30) Priorité: 19.12.86 FR 8617893

(43) Date de publication de la demande:
27.07.88 Bulletin 88/30

(45) Mention de la délivrance du brevet:
16.08.90 Bulletin 90/33

(84) Etats contractants désignés:
DE GB IT

(56) Documents cités:
FR-A- 2 209 346
FR-A- 2 559 117
GB-A- 2 035 931

(73) Titulaire: AUTOMOBILES PEUGEOT, 75, avenue de la
Grande Armée, F-75116 Paris(FR)
Titulaire: AUTOMOBILES CITROEN, 62 Boulevard
Victor-Hugo, F-92200 Neuilly-sur-Seine(FR)

(72) Inventeur: Degonde, Michel Georges, 41 rue du
Lieutenant Colonel de Montbrison, F-92500 Rueil
Malmaison(FR)

(74) Mandataire: Durand, Yves Armand Louis et al, Cabinet Z.
Weinstein 20, Avenue de Friedland, F-75008 Paris(FR)

## Description

L'invention concerne un dispositif de correction de l'angle d'attitude d'un véhicule automobile qui comporte, outre la commande habituelle de la direction des roues d'un essieu par le volant, des moyens induisant sur au moins un essieu une correction de braquage en fonction de paramètres représentatifs de l'état dynamique du véhicule et mesurés par des capteurs fournissant des signaux électriques correspondants, ces paramètres incluant la vitesse instantanée S' du véhicule, sa vitesse angulaire de lacet β' et son accélération latérale R, et des moyens de calcul d'un signal électrique de correction à partir de ces paramètres, qui est appliqué à des moyens de correction de braquage.

L'angle d'attitude du véhicule est l'angle de la direction longitudinale du véhicule avec la vitesse de son centre de gravité.

Les systèmes connus de ce type utilisent les quantités S', β', R en vue de générer un signal qui est la différence entre deux termes :

Un terme de référence représentatif de la vitesse angulaire de lacet qu'aurait le véhicule en régime stabilisé sous l'influence du braquage instantané du volant de direction ;

Un terme sensé être représentatif de l'état dynamique instantané du véhicule qui n'est d'ailleurs que partiellement représentatif de cet état.

Cependant, un tel système qui vise à l'atténuation d'une vitesse de lacet excessive au regard de l'angle de braquage instantané, ne peut convenir aux fins de réaliser une évolution du véhicule à attitude nulle, ou minimale.

La présente invention a donc pour objectif de proposer un dispositif de correction du type défini plus haut, qui remédie à l'inconvénient qui vient d'être énoncé.

Pour atteindre ce but, le dispositif de correction selon l'invention est caractérisé en ce que les moyens de calcul du signal électrique de correction sont adaptés pour élaborer ce signal à partir d'une quantité $\underline{e}$ égale à $(R-β'S')/S'$ ou à $R-β'S'$.

Selon une caractéristique avantageuse de l'invention, les moyens de correction sont adaptés pour maintenir une vitesse de braquage constante tant que le signal de correction est différent de zéro, cette vitesse s'annulant avec le signal.

Selon encore une autre caractéristique avantageuse de l'invention, les moyens de correction sont adaptés pour induire une correction de braquage dont la vitesse est proportionnelle au signal de correction E.

Selon encore une autre caractéristique avantageuse de l'invention, le dispositif selon l'invention comporte en outre des moyens de contrôle de position adaptés pour permettre d'induire une correction de braquage proportionnelle au signal de correction E.

Selon encore une autre caractéristique avantageuse de l'invention, les moyens de correction de braquage sont adaptés pour agir sur l'essieu arrière non habituellement directeur.

L'invention sera mieux comprise et d'autres buts, caractéristiques, détails et avantages de celle-ci apparaîtront mieux dans la description explicative qui va suivre faite en référence aux dessins schématiques annexés donnés uniquement à titre d'exemple illustrant plusieurs modes de réalisation de l'invention et dans lesquels :

La figure 1 représente schématiquement un dispositif selon la présente invention, dans sa forme la plus générale ; et

Les figures 2 et 3 montrent deux modes de réalisation d'un dispositif selon l'invention, dans des versions plus simples.

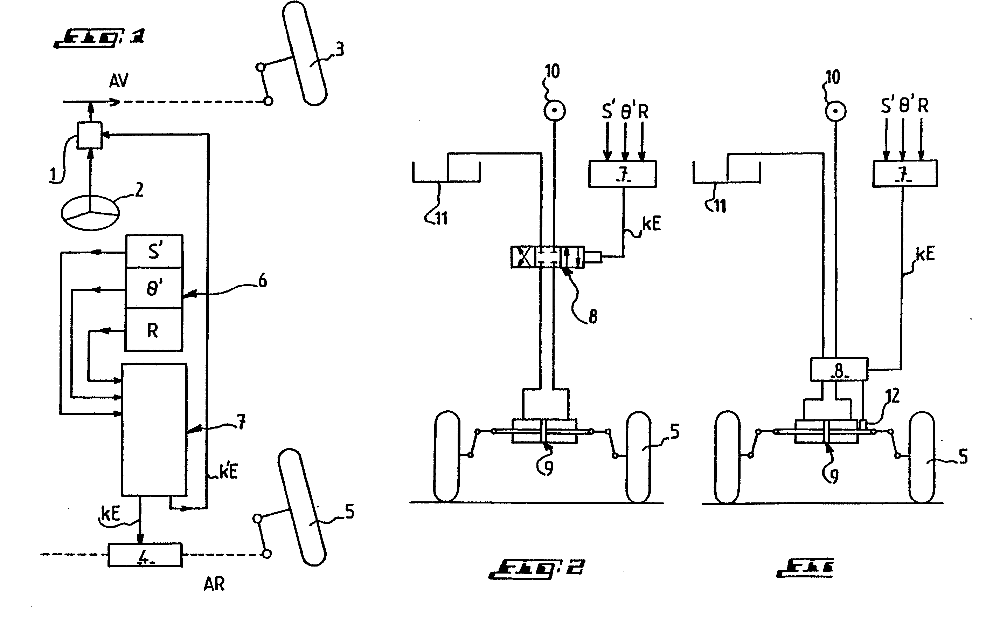

La figure 1 représente un dispositif de correction de l'angle d'attitude d'un véhicule automobile, dans lequel la correction de l'angle est appliquée à la fois à l'essieu avant AV et à l'essieu arrière AR.

Ce dispositif comporte une commande habituelle 1 permettant au conducteur de diriger le véhicule à l'aide du volant 2 en braquant les roues avant 3, des moyens 4 de commande de braquage des roues arrière, une unité de mesure 6 adaptée pour délivrer des signaux électriques, à savoir un signal représentatif de la vitesse instantanée S' du véhicule, un signal représentatif de la vitesse angulaire de lacet β' mesurée par un gyromètre ou tout autre moyen équivalent et un signal représentant l'accélération transversale R du véhicule mesuré par un accéléromètre disposé au voisinage du centre de gravité, ainsi qu'un calculateur 7 auquel sont appliqués les trois signaux.

L'unité de calcul 7 est adaptée pour générer une fonction de commande E à partir de la quantité $\underline{e}$ égale à $R-β'S'$ ou à $(R-β'S')/S'$, la dernière expression représentant avec une très bonne approximation la dérivée par rapport au temps de l'angle d'attitude du véhicule.

L'unité de calcul appliquera des signaux de commande de braquage au moyen de braquage 4 et, le cas échéant, à un moyen auxiliaire de correction de l'angle de braquage des roues avant 3, incorporé à la commande habituelle 1, à savoir les signaux kE et k'E.

La fonction de commande E peut être générée dans l'unité de calcul 7 à partir de $\underline{e}$ de toute façon comme en régulation. Le système fonctionne en effet en boucle fermée et E peut être considéré comme représentatif du signal d'erreur d'un système asservi pour commander le ou les moyens de braquage. E est nécessairement une fonction impaire de $\underline{e}$ et peut être la fonction $\underline{e}$ elle-même.

La figure 2 montre un premier mode de réalisation de l'invention, d'une structure plus simple, assurant un braquage des roues arrière 5. Dans ce mode de réalisation, le signal de correction kE en provenance de l'unité de calcul 7 est appliqué à une électrovanne 8 qui met, selon le signe de E, l'une des chambres d'un vérin à double effet 9 en liaison avec une source de pression 10 et l'autre avec un réservoir 11 d'un système d'alimentation en un fluide sous pression. Ainsi le vérin 9 est commandé pour agir sur le braquage des roues arrière 5.

Tant que E est différent de zéro, on déplace la barre de commande à vitesse constante ou, autrement dit, à débit constant. Lorsque E devient nul (ou inférieur à une valeur relativement faible), le dénit est interrompu et l'angle de braquage est alors maintenu constant.

En lieu et place de la vanne 8, on peut aussi utiliser une électrovanne délivrant un débit proportionnel au signal kE. Dans ce cas, δ A étant l'angle de braquage de l'essieu arrière AR, ce braquage suit la loi :

$$d\,\delta\,A/dt = kE$$

Dans ce cas, la vitesse de braquage de l'essieu est proportionelle à E.

La figure 3 représente schématiquement un deuxième mode de réalisation de l'invention, dans lequel le braquage est proportionnel à E. Ceci nécessite cependant de connaître la position angulaire δ A à chaque instant. A cette fin le dispositif comporte un capteur 12 de position angulaire de l'essieu arrière, qui est relié à l'électrovanne 8. L'ensemble 8, 9 et 12 peut être un dispositif de direction asservi dans lequel l'angle de braquage est proportionnel à kE.

## Revendications

1. Dispositif de correction de l'angle d'attitude d'un véhicule automobile qui comporte, outre la commande habituelle de la direction des roues d'un essieu par le volant, des moyens induisant sur au moins un essieu une correction de braquage en fonction de paramètres représentatifs de l'état dynamique du véhicule et mesurés par des capteurs fournissant des signaux électriques correspondants, ces paramètres incluant la vitesse instantanée S′ du véhicule, sa vitesse angulaire de lacet β, et son accélération latérale R, et des moyens de calcul d'un signal électrique de correction à partir de ces paramètres, qui est appliqué à des moyens de correction de braquage, caractérisé en ce que les moyens de calcul (7) du signal de correction (kE, k′ E) sont adaptés pour élaborer ce signal à partir d'une quantité e égale à (R-β′S′)/S′ ou à R-β′S′.

2. Dispositif selon la revendication 1, caractérisé en ce que les moyens de correction de braquage (4,1) sont adaptés pour maintenir une vitesse de braquage constante tant que le signal (kE, k′E) est différent de zéro, cette vitesse s'annulant avec ledit signal.

3. Dispositif selon la revendication 1, caractérisé en ce que les moyens de correction de braquage (4, 1) sont adaptés pour induire une correction de braquage dont la vitesse est proportionnelle au signal de correction kE, k′ E.

4. Dispositif selon la revendication 1, caractérisé en ce qu'il comporte en outre des moyens de contrôle de position angulaire d'essieu (12), adaptés pour permettre d'induire une correction de braquage proportionnelle au signal de correction kE.

5. Dispositif selon l'une des revendications précédentes, caractérisé en ce que les moyens de correction de braquage (4) sont adaptés pour agir sur l'essieu arrière AR non habituellement directeur.

6. Dispositif selon l'une des revendications précédentes, caractérisé en ce que les moyens de correction de braquage (4) comportent un organe de commande tel qu'un vérin (9) et un organe de pilotage tel qu'une électrovanne (8), de l'organe de commande (9), qui est incorporé dans un circuit d'un fluide sous pression, le signal de correction kE étant appliqué à l'organe de pilotage (8).

7. Dispositif selon la revendication 4, caractérisé en ce que les moyens de contrôle de position (12) sont reliés à l'organe de pilotage (8).

## Patentansprüche

1. Vorrichtung zur Korrektur des Fahrlagewinkels eines Kraftfahrzeuges, die außer der üblichen Steuerung der Lenkung der Räder einer Radachse durch das Lenkrad, Mittel aufweist, um an wenigstens einer Radachse eine Lenkungsausschlagskorrektur in Abhängigkeit von den dynamischen Zustand des Fahrzeugs darstellenden und durch entsprechende elektrische Signale abgebende Meßwertgeber gemessenen Parametern zu veranlassen; wobei diese Parameter, die Momentangeschwindigkeit S′ des Fahrzeugs, seine Gierwinkelgeschwindigkeit θ′ und seine Seitenbeschleunigung R und Mittel zur Berechnung eines elektrischen Korrektursignals aufgrund dieser Parameter, welches an die Lenkungsausschlagskorrekturmittel angelegt wird, umfassen, dadurch gekennzeichnet, daß die Mittel (7) zur Berechnung des Korrektursignals (kE, k′E) zur Ausarbeitung dieses Signals aufgrund einer mit (R-θ-θS′)/S′ oder mit R-θ′S′

2. Vorrichtung nach Anspruch 1, dadurch gekennzeichnet, daß die Lenkungsausschlagskorrekturmittel (4, 1) angepaßt sind, um eine konstante Lenkungsausschlagsgeschwindigkeit aufrecht zu erhalten, solange das Signal (k E, k′E) sich von Null unterscheidet, wobei diese Geschwindigkeit zusammen mit dem besagten Signal gleich Null wird.

3. Vorrichtung nach Anspruch 1, dadurch gekennzeichnet, daß die Lenkungsausschlagskorrekturmittel (4, 1) angepaßt sind, um eine Lenkungsausschlagskorrektur deren Geschwindigkeit proportional mit dem Korrektursignal (kE, k′E) ist, zu veranlassen.

4. Vorrichtung nach Anspruch 1, dadurch gekennzeichnet, daß sie außerdem Mittel (12) zur Kontrolle der Radachswinkelstellung aufweist, welche angepaßt sind, um die Veranlassung einer mit dem Korrektursignal (kE) proportionalen Lenkungsausschlagskorrektur zu ermöglichen.

5. Vorrichtungen, nach einem der vorangehenden Ansprüche, dadurch gekennzeichnet, daß die Lenkungsausschlagskorrekturmittel (4) angepaßt sind, um auf die gewöhnlich nicht steuerbare Hinterradachse AR einzuwirken.

6. Vorrichtung nach einem der vorangehenden Ansprüche dadurch gekennzeichnet, daß die Lenkungsausschlagskorrekturmittel (4) ein Betätigungsglied wie einen Kraftzylinder (9) und ein Glied wie ein Elektroventil (8) zur Steuerung des Betätigungsgliedes (9), welches in einem Druckmittelkreislauf eingebaut ist, um fassen, wobei das Korrektursignal kE an das Steuerglied (8) angelegt wird.

7. Vorrichtung nach Anspruch 4, dadurch gekennzeichnet, daß die Stellungskontrollmittel (12) mit dem Steuerglied (8) verbunden sind.

**Claims**

1. Device for the correction of the angle of attitude of an automotive vehicle which comprises in addition to the usual control of the steering of the wheels of an axle by the steering wheel, means inducing on at least one axle a correction of the lock in accordance with parameters representative of the dynamic state of the vehicle and measured by sensors delivering corresponding electric signals, these parameters including the instantaneous speed S' of the vehicle, its angular velocity of yaw $\theta'$ and its lateral acceleration R and means for computing an electric correction signal from these parameters which is applied to lock correction means, characterized in that the means (7) for computing the correction signal (kE, k'E) are adapted to work out this signal from a value e equal to $(R-\theta'S')/S'$ or to $R-\theta'S'$.

2. Device according to claim 1, characterized in that the lock correction means (4, 1) are adapted to keep a velocity of lock constant as long as the signal (kE, k'E) is different from zero, this velocity becoming zero with the said signal.

3. Device according to claim 1, characterized in that the lock correction means (4, 1) are adapted to induce a correction of lock the velocity of which is proportional to the correction signal (kE, k'E).

4. Device according to claim 1, characterized in that it further comprises means for controlling the angular axle position (12) adapted to allow to induce a correction of lock proportional to the correction signal (kE).

5. Device according to one of the foregoing claims, characterized in that the lock correction means (4) are adapted to act upon the usually non steerable rear axle (AR).

6. Device according to one of the preceding claims, characterized in that the lock correction means (4) comprise an operating member such as a jack (9) and a pilot member such as an electrovalve (8) for the operating member (9), which is incoporated into a pressure fluid circuit, the correction signal (kE) being applied to the pilot member (8).

7. Device according to claim 4, characterized in that the position control means (12) are connected to the pilot member (8).

Fig.1

Fig.2

Fig.3

AV

AR

S' θ' R

kE